Europäisches Patentamt

**European Patent Office**

Office européen des brevets

(11) Numéro de publication: **0 161 972**
A2

# (12) DEMANDE DE BREVET EUROPEEN

(21) Numéro de dépôt: **85400780.4**

(22) Date de dépôt: **19.04.85**

(51) Int. Cl.⁴: **B 23 D 15/14**, B 23 D 35/00

(30) Priorité: **17.05.84 FR 8407637**

(43) Date de publication de la demande: **21.11.85**
**Bulletin 85/47**

(84) Etats contractants désignés: **AT BE CH DE GB IT LI NL SE**

(71) Demandeur: **PROMECAM SISSON-LEHMANN, 63, rue de Strasbourg, F-93206 Saint-Denis Cédex 1 (FR)**

(72) Inventeur: **Passa, René, 103, Grande Rue, F-95760 Valmondois (FR)**

(74) Mandataire: **Tony-Durand, Serge, Cabinet Tony-Durand 22, Boulevard Voltaire, F-75011 Paris (FR)**

(54) **Cisaille hydraulique.**

(57) Le support de la lame inférieure (5) de cette cisaille consiste en un caisson creux (6) s'étendant horizontalement entre les deux flasques verticaux (1) du bâti auquel il n'est fixé que par ses extrémités. Or, cette lame est fixée contre l'une des parois latérales de ce caisson, de façon à se trouver déportée par rapport au centre théorique (0) de rotation de ce caisson sur lui-même. De ce fait, les efforts verticaux s'exerçant sur la lame inférieure (5), lors de l'utilisation de la cisaille, tendent à provoquer une torsion de ce caisson (6) en assurant ainsi la compensation de la flexion horizontale de celui-ci sous l'effet des efforts horizontaux. De préférence le tablier supérieur mobile (10) de cette cisaille est incliné vers le haut de façon à favoriser l'effet de flambage de ce tablier, afin de provoquer un avancement de la lame supérieure (9), dans le but de concourir à la réduction du jeu entre les lames.

Cette cisaille est destinée à être utilisée pour la coupe de tôles d'acier et similaires.

1

"Cisaille hydraulique"

La présente invention concerne les cisailles hydrauliques utilisées pour cisailler des tôles d'acier ou similaires.

Ces cisailles comportent deux lames, à savoir une lame inférieure fixée entre deux flasques verticaux du bâti et une lame supérieure portée par un tablier mobile. Vue de face, cette dernière lame est disposée en oblique pour être inclinée sur un côté afin que l'opération de cisaillage d'une tôle commence près de l'un des bords de celle-ci pour se poursuivre vers l'autre bord, au fur et à mesure de la descente du tablier mobile.

Dans les cisailles actuelles de ce genre, la lame inférieure est fixée contre le bord supérieur d'un tablier vertical qui s'étend entre les deux flasques latéraux du bâti, et qui est solidaire d'une table horizontale destinée à supporter les tôles à cisailler. Mais, lors de l'utilisation d'une telle cisaille, il se produit des réactions de résistance à la coupe qui s'exercent suivant une direction verticale et une direction horizontale. Ces réactions ont tendance à provoquer des flexions horizontales et verticales des tabliers fixe et mobile. Cependant les flexions verticales ne posent que de simples problèmes de tenue à la fatigue des flexions.

Par contre les flexions horizontales ont tendance à écarter horizontalement les deux lames. De ce fait le jeu entre celles-ci s'accroît, ce qui modifie la géométrie de la coupe et crée une augmentation de la réaction horizontale. Le système est donc cumulatif et générateur de mauvais résultats de coupe (principalement:production de bavures).

C'est pourquoi la présente invention a pour but de réaliser une cisaille dont la conception est telle que l'on réduit le jeu entre les lames, afin d'obtenir de bonnes conditions de coupe.

A cet effet l'invention met tout d'abord à profit les forces verticales qui s'exercent sur la lame inférieure fixe pour compenser la flexion horizontale du support de celle-ci. Cependant la présente invention met également à profit l'effet de flambage du tablier supérieur pour réduire le jeu entre les lames et elle comporte un certain nombre d'autres perfectionnements additionnels.

Suivant une première caractéristique de la cisaille selon l'invention, le support de la lame inférieure de celle-ci consiste en un caisson creux s'étendant horizontalement entre les deux flasques verticaux du bâti et contre l'une des parois latérales duquel cette lame est fixée, de façon à se retrouver déportée par rapport au centre théorique de rotation de ce caisson, lors d'une torsion de celui-ci sur lui-même.

Ainsi les efforts verticaux, qui s'exercent sur la lame fixe, se trouvent appliqués sur le bord correspondant de ce caisson, ce qui tend à créer un couple de torsion. Or la déformation, qui en résulte, a tendance à rapprocher l'arête de la lame fixe de la lame mobile, ce qui réduit le jeu entre les lames.

Selon une autre caractéristique de la présente cisaille, le tablier supérieur mobile de celle-ci est inclinée vers l'arrière, à partir du bas dudit tablier, de façon à favoriser l'effet de flambage de ce tablier, afin de provoquer un avancement de la lame supérieure, dans le but de concourir également à la réduction du jeu entre les lames.

Cependant la cisaille selon l'invention présente un certain nombre d'autres perfectionnements qui apparaîtront au cours de la description suivante d'un exemple de réalisation de celle-ci.

Cette description est donnée en référence aux dessins annexés à simple titre indicatif, et sur lesquels :

La figure 1 est une vue schématique en perspective d'une cisaille selon l'invention ;

La figure 2 en est une vue en coupe transversale ;

La figure 3 est une vue schématique en élévation en bout d'une réalisation du tablier supérieur mobile de la présente cisaille ;

La figure 4 est une vue schématique de face du tablier mobile de cette cisaille ;

La figure 5 est une vue schématique partielle d'une autre variante de ce tablier, celui-ci étant vu de face ;

Les figures 6 et 7 sont des schémas illustrant les conditions d'équilibre du tablier mobile de la présente cisaille;

Les figures 8 et 9 sont des vues schématiques en coupe transversale illustrant les conditions de déformation du caisson creux servant de support à la lame inférieure mobile de la cisaille selon l'invention ;

La figure 10 est une vue schématique de face d'une cisaille classique ;

La figure 11 est une vue schématique en coupe d'une d'une telle cisaille selon la ligne XI-XI de la figure 10 ;

La figure 12 est un schéma illustrant les conditions de déformation du tablier inférieur d'une telle cisaille sous l'effet des efforts horizontaux subis par celui-ci;

La figure 13 est une vue schématique en coupe verticale illustrant les efforts horizontaux et verticaux subis par les deux tabliers, fixe et mobile, d'une cisaille classique.

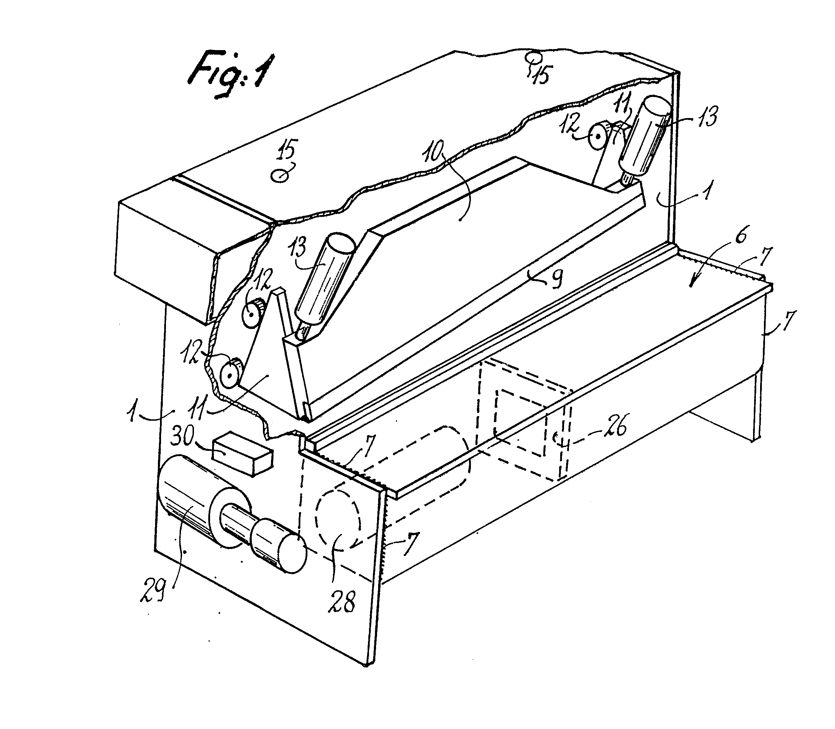

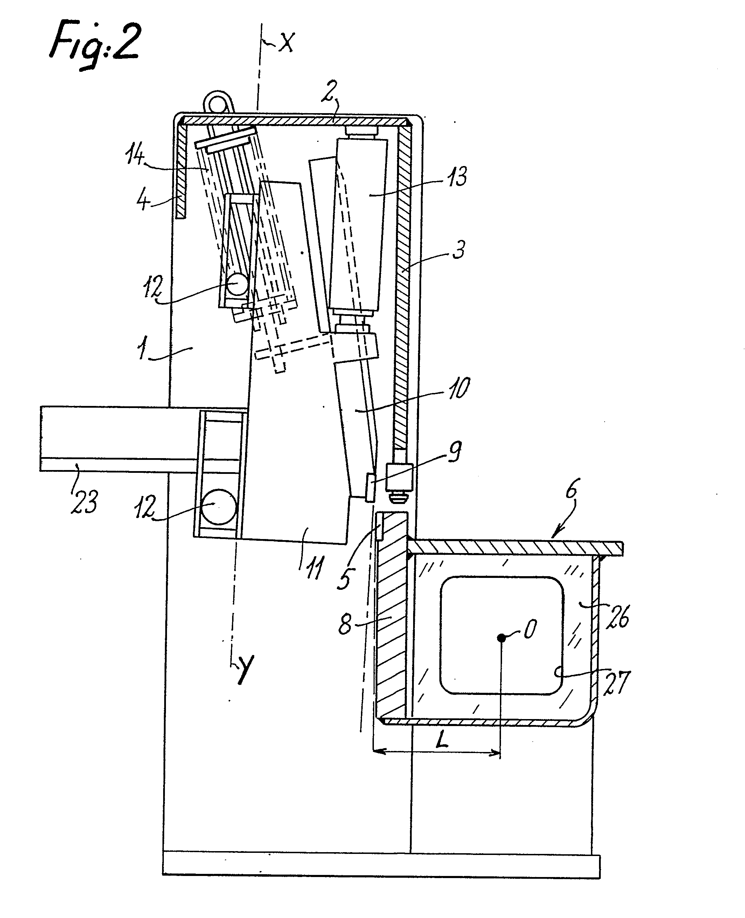

Le bâti de la cisaille représentée aux figures 1 et 2 comprend deux flasques latéraux 1, ayant un contour en forme général de L, et qui sont disposés dans deux plans verticaux parallèles. A leur partie supérieure, ces deux flasques sont réunis par des panneaux 2, 3 et 4 constituant en quelque sorte un caisson ouvert en forme de U renversé. Pour la facilité de compréhension de la figure 1, le panneau avant 3 n'a pas été représenté sur celle-ci.

Le support de la lame inférieure fixe 5 de la présente cisaille consiste en un caisson creux fermé, désigné par la référence générale 6, et qui s'étend horizontalement sur le devant de cette cisaille, entre les branches inférieures des deux flasques latéraux 1. Ce caisson est fixé sur le bâti de la présente cisaille uniquement par ses extrémités, en l'occurrence par soudure des bords de ses extrémités contre la face interne des deux flasques latéraux 1 et ce, par des cordons de soudure 7.

La lame inférieure 5 est fixée près du bord supérieur de l'une des parois latérales du présent caisson, en l'occurrence la paroi verticale 8 tournée vers l'intérieur. De ce fait la position de cette lame est déportée d'une distance L par rapport au centre O du caisson creux 6, qui lui sert

4

de support. Ainsi qu'il a déjà été indiqué, et comme il sera expliqué plus en détail par la suite, cet agencement permet de mettre à profit les efforts verticaux, qui s'exercent sur la lame fixe, pour compenser les déformations de son support dans le sens horizontal.

La lame supérieure mobile 9 de la présente cisaille est fixée sur le bord inférieur d'un tablier mobile 10 comportant, à ses extrémités, deux joues verticales 11 disposées en regard des flasques latéraux 1 du bâti.

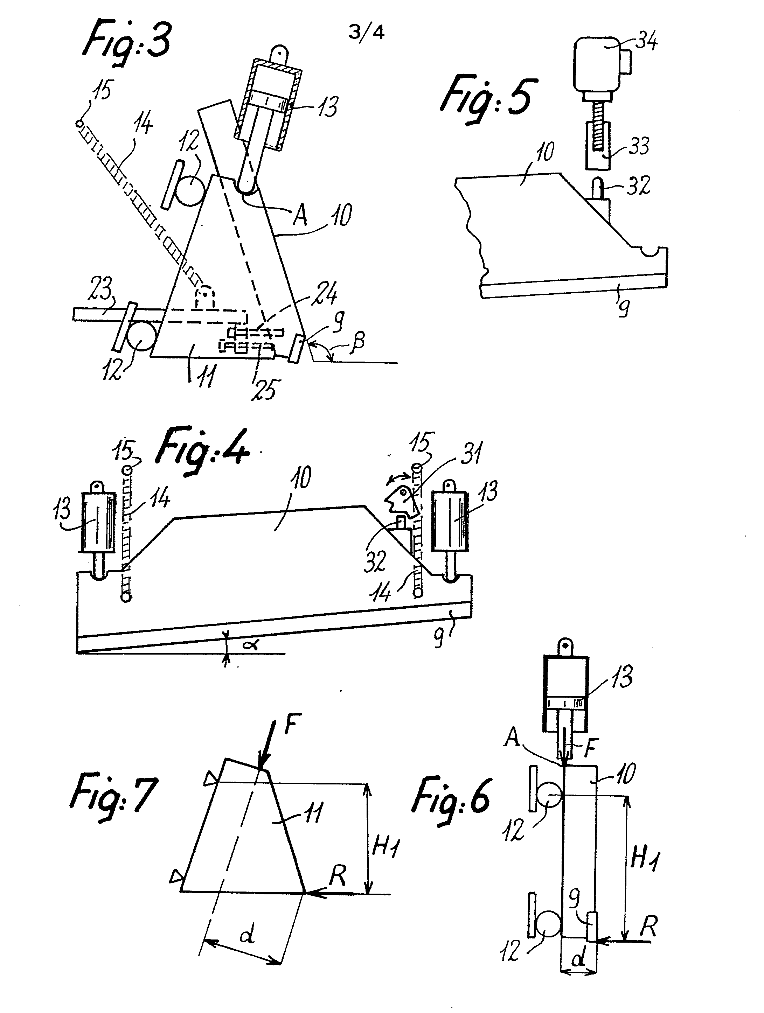

Il convient de noter que le tablier mobile 10 n'est pas disposé dans un plan vertical, mais dans un plan incliné vers l'arrière à partir du bas,ce plan faisant,par rapport à l'horizontale,un angle obtus $\beta$ de l'ordre de 92 ° à 110 °, par exemple 98 °. Les rampes de guidage prévues sur le bord arrière des joues latérales, et qui se déplacent au contact de deux galets fixes 12, présentent pour leur part une inclinaison inverse. Dans un but de meileure compréhension des dessins, ces inclinaisons ont été volontairement accentuées sur la figure 3.

La descente de ce tablier mobile est commandée par deux vérins hydrauliques 13 disposés à l'une et l'autre extrémités. Quant à son relèvement, il est assuré par des ressorts de rappel 14 agissant en traction. Ceux-ci sont disposés en diagonale de façon à tirer ce tablier à la fois vers le haut et vers l'arrière (voir figure 3), les points supérieurs 15 d'accrochage de ces ressorts étant indiqués à la figure 1.

L'inclinaison du tablier supérieur mobile 10 a pour but de s'opposer à un accroissement du jeu entre les deux lames de la présente cisaille, ce qui était déjà le but du mode particulier de montage de la lame fixe sur le bâti.

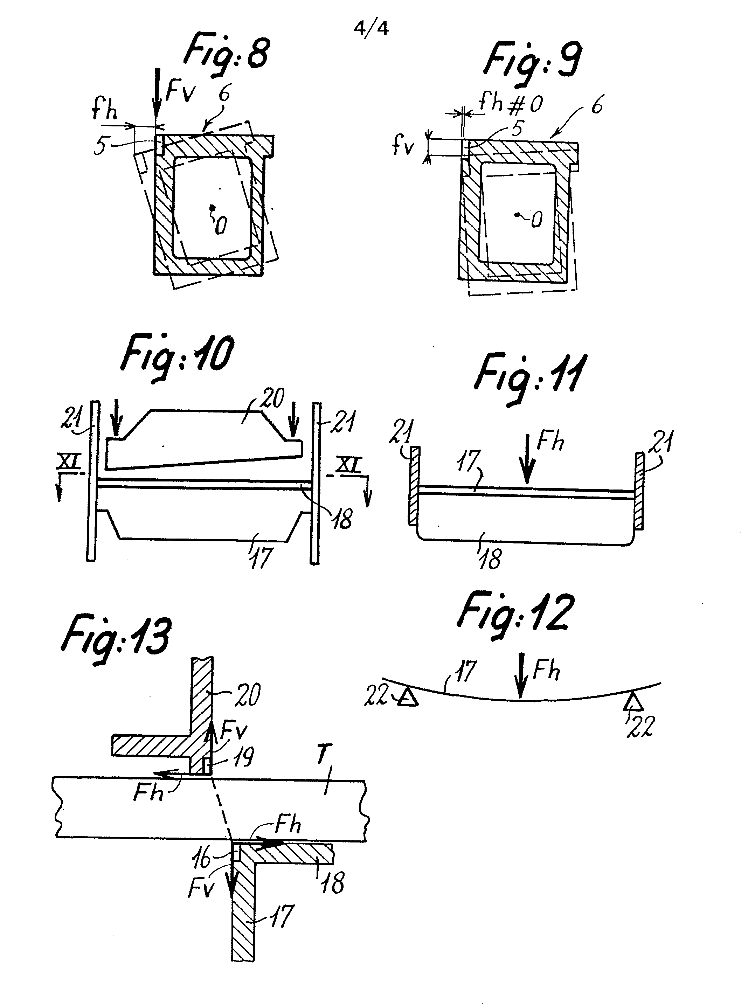

Pour se rendre compte du rôle joué par le montage de la lame fixe sur le caisson 6, il convient tout d'abord de se reporter aux conditions de fonctionnement d'une cisaille classique, telle que celle illustrée par les schémas des figures 10 à 13. Dans une telle cisaille la lame inférieure 16 est fixée contre le bord supérieur d'un tablier vertical 17 fixé, à ses extrémités, sur deux flasques latéraux du bâti,ce tablier étant

5

solidaire d'une table horizontale 18 disposée en équerre. Quant à la lame supérieure 19, elle est portée par le bord inférieur d'un tablier mobile 20 disposé entre les deux flasques latéraux 21 du bâti.

Comme illustré sur la figure 13, les réactions de résistance à la coupe, lors du cisaillage d'une tôle T, provoquent sur chaque lame 16 et 19 des efforts horizontaux et verticaux, respectivement Fh et Fv. Etant donné que les réactions horizontales s'exercent en sens inverse sur le tablier supérieur et sur le tablier inférieur, ceci a pour effet d'accroître le jeu entre les deux lames 16 et 19. Comme représenté sur le schéma de la figure 12, le tablier 17 subit alors une flexion horizontale à la façon d'une simple poutre dont les extrémités reposent contre deux points d'appui 22. La déformation de ce tablier répond donc à la formule de flexion d'une poutre en appui à ses extrémités, avec une flèche maximum au centre.

Compte tenu que les réactions horizontales ont un ordre de grandeur de 20 % de la force verticale appelée "force de coupe", l'agencement prévu dans la cisaille selon l'invention a pour but d'utiliser cette force verticale pour compenser la flexion horizontale exposée ci-dessus. Ce résultat est atteint par le fait que, dans la cisaille selon l'invention, la lame fixe 5 est fixée sur l'une des parois latérales d'un caisson creux 6 dans une position déportée par rapport au centre théorique O de rotation de ce caisson, lorsque celui-ci subit un effort de torsion.

En effet, comme illustré sur la figure 8, la force verticale Fv, qui s'exerce sur la lame fixe 5, crée alors un couple de torsion tendant à faire tourner le caisson 6 sur lui-même autour de son centre O. Ceci a donc pour effet de rapprocher l'arête de la lame 5 de la lame mobile 9. Il suffit alors de calculer les inerties ainsi que la longueur du bras de levier L, pour que cette rotation soit sensiblement du même ordre de grandeur que la flèche horizontale du support de la lame 5. Ainsi comme illustré sur la figure 9, il n'y a pratiquement plus de déplacement horizontal de l'arête de la lame inférieure 5, de sorte que l'on obtient une conservation de la géométrie de la coupe et par suite, une amélioration des résultats.

Comme déjà indiqué, l'inclinaison du tablier supérieur 10 a pour but de favoriser l'effet de flambage de celui-ci afin de contribuer également à la réduction du jeu entre les lames.

Cependant, pour que la réaction horizontale ne fasse pas fléchir ce tablier et ses organes de guidage, le point d'application A des vérins 13, sur le bord supérieur des joues latérales 11 du tablier supérieur 10, est déplacé vers l'arrière par rapport à la position de la lame mobile 9 (voir figure 3 ainsi que le schéma théorique de la figure 6). Grâce à la réaction verticale de la tôle à cisailler, ceci crée un couple qui a tendance à faire avancer la lame supérieure 9, et par suite à réduire le jeu entre les lames.

Pour empêcher que les lames ne se frottent, seule la réaction horizontale de coupe R est utilisable. Il suffit donc de respecter le rapport $R \gg \dfrac{F.d}{H_1}$ pour éviter le frottement des lames.

On fait en sorte que la force d'équilibre soit très proche de $R_1$ de sorte que les réactions horizontales sur le tablier et ses organes de guidage sont très faibles en toutes circonstances, car il existe une relation entre R et F telle que $R \simeq 0,2$ F. Il suffit donc de choisir de façon adéquate le rapport $\dfrac{d}{H_1}$ pour que l'équilibre soit toujours assuré (voir figure 7).

Pour éviter la flexion du tablier supérieur 10 au centre de sa longueur, il est adjoint à celui-ci une tablette horizontale 23 qui s'étend vers l'arrière. Comme représenté sur la figure 3, la solidarisation du tablier 10 et de cette tablette est assurée par deux séries de vis 24 et 25, réparties sur toute la longueur, et qui correspondent respectivement à des vis de traction et à des vis de poussée. Ce système permet d'ajuster la linéarité de la lame supérieure et d'éviter le vrillage de l'ensemble.

La combinaison des deux caractéristiques décrites précédemment -à savoir : le montage de la lame fixe sur un caisson susceptible de subir une torsion sur lui-même, et l'inclinaison du tablier supérieur mobile- offre des résultats très avantageux à la fois sur le plan technique et sur le plan économique. En effet la somme des déformations horizontales, qui sont les plus néfastes pour une bonne exécution des coupes, ont été diminuées dans un rapport supérieur à dix, cependant que le poids de l'ensemble se trouve réduit de 10 %, toutes conditions restant égales par ailleurs.

En ce qui concerne les déformations susceptibles de se produire, il convient de noter que si les forces s'opposant à la coupe sont bien toujours constantes, il n'en est pas de même du point d'application qui se déplace de la gauche vers la droite, tout au long de la ligne de coupe. Il s'ensuit que les flexions croissent de la gauche jusqu'au centre pour décroître ensuite. Mais comme dans le même temps, la torsion du caisson inférieur 6 croît également jusqu'au centre pour décroître ensuite, il y a toujours compensation quasi totale des déformations,ce qui est bien le but recherché.

Pour éviter un risque d'ovalisation du caisson 6 lors des torsions de celui-ci, il peut être avantageusement prévu une ou plusieurs cloisons intermédiaires 26 à l'intérieur de celui-ci, ces cloisons pouvant comporter une ouverture 27. De plus ce caisson peut servir de logement au réservoir 28 faisant partie du circuit hydraulique de commande des vérins 13. Ce circuit comprend par ailleurs un groupe hydraulique 29 ainsi qu'un bloc de commande 30 . Comme représenté sur la figure 1 , ceux-ci sont avantageusement fixés à l'extérieur de la machine sur la face externe de l'un des flasques latéraux du bâti, ce qui facilite l'accès pour les opérations d'entretien et de démontage. Cependant il n'y a pas lieu de décrire la conception de ce circuit hydraulique, car il peut être identique à ceux habituellement prévus sur les cisailles classiques.

8

De préférence la présente cisaille est également équipée d'un système permettant de régler son angle de coupe, c'est-à-dire l'angle formé par la lame mobile 9 par rapport à l'horizontale. Comme représenté sur la figure 4 ce système peut être constitué par une butée mobile 31 ayant plusieurs crans d'appui de profondeur différente et dont chacun est en mesure de coopérer avec une butée élastique 32 portée par l'extrémité la plus relevée du tablier supérieur 10. Ainsi le réglage peut être effectué en manoeuvrant à la main la butée mobile 31 pour placer l'un et l'autre de ces crans en regard de la butée 32.

Cependant comme représenté à la figure 5, ce système à commande manuelle peut être remplacé par une butée mobile 33 constituée par un vérin linéaire actionné par un moteur électrique 34. Cette butée est alors, comme précédement, disposée en regard de la butée élastique 32 portée par le tablier mobile 10.

9

## REVENDICATIONS

1 - Cisaille hydraulique dont la lame inférieure est fixée entre deux flasques verticaux du bâti, tandis que la lame supérieure est portée par un tablier mobile, caractérisée en ce que le support de la lame inférieure (5) de celle-ci consiste en un caisson creux (6) s'étendant horizontalement entre les deux flasques verticaux (1) du bâti auquel il n'est fixé que par ses extrémités, et, en ce que cette lame est fixée contre l'une des parois latérales de ce caisson, de façon à se trouver déportée par rapport au centre théorique (O) de rotation de ce caisson sur lui-même, de sorte que les efforts verticaux s'exerçant sur la lame inférieure (5), lors de l'utilisation de la cisaille, tendent à provoquer une torsion de ce caisson (6) en assurant ainsi la compensation de la flexion horizontale de celui-ci sous l'effet des efforts horizontaux.

2 - Cisaille hydraulique selon la revendication 1, caractérisée en ce que le tablier supérieur mobile (10) de celle-ci est incliné vers l'arrière,à partir du bas dudit tablier,de façon à favoriser l'effet de flambage de ce tablier, afin de provoquer un avancement de la lame supérieure (9), dans le but de concourir à la réduction du jeu entre les lames.

3 - Cisaille hydraulique selon la revendication 2, caractérisée en ce que la descente du tablier mobile (10) est assurée par deux vérins (13), disposés à ses extrémités, et dont les points d'application (A) sont déplacés vers l'arrière par rapport à la position de la lame mobile (9).

4 - Cisaille hydraulique selon l'une des revendications précédentes, caractérisée en ce que le tablier supérieur mobile (10) est renforcé par une tablette horizontale (23) s'étendant vers l'arrière et qui est solidarisée avec celui-ci par l'intermédiaire de deux séries de vis réparties sur la longueur de ce tablier, et consistant respectivement en des vis de traction (24) et des vis de poussée (25), évitant le vrillage de l'ensemble et permettant d'ajuster la linéarité de la lame mobile (9).

5 - Cisaille hydraulique selon l'une des revendications

10

précédentes, caractérisée en ce que le tablier supérieur mobile (10) est rappelé vers le haut, et vers l'arrière, par des ressorts de rappel (14) disposés en diagonale.

Fig.1

Fig:2

0161972

2/4

0161972

3/4

Fig.3

Fig.5

Fig.4

Fig.7

Fig.6

*Fig: 8*

*Fig: 9*

*Fig: 10*

*Fig: 11*

*Fig: 13*

*Fig: 12*